# EUROPEAN PATENT SPECIFICATION

(11) **EP 0 559 369 B1**
(45) Date of publication and mention of the grant of the patent: **30.01.2002**
(21) Application number: 93301359.1
(22) Date of filing: 24.02.1993
(51) Int. Cl.: H04Q 3/545, G06F 9/44, H04M 3/00

(54) **Distributed call processing**
Verteilte Anrufverarbeitung
Traitement d'appel distribué

(30) Priority: 28.02.1992 GB 9204300
(43) Date of publication of application: 08.09.1993
(73) Proprietor: MARCONI COMMUNICATIONS LIMITED, Coventry, CV3 1HJ (GB)
(72) Inventor: Stubbs, Charles Richard, Solihull, West Midlands B91 3YE (GB)
(74) Representative: Branfield, Henry Anthony

(56) References cited:
- EP-A- 0 421 583
- EP-A- 0 463 251
- US-A- 4 558 413
- DATABASE WPI Week 199133, Derwent Publications Ltd., London, GB; Class T01, AN 1991-244932 ANONYMOUS: 'Software upgrade resume capability - provides technician with failing step number which is used to determine which steps have been completed and do not need repeating' & INTERNATIONAL TECHNOLOGY DISCLOSURE no. 05, 25 July 1991

## Description

Current trends in telecommunication networks development indicate a devolvement of some features of call control away from switching nodes. The Intelligent Network concept locates call processing capability in network nodes called Service Control Points. Implementations of 'Freephone'-like services (sometimes referred to as Intelligent Network phase 1 implementations) have devolved routing control to overlay networks.

Other developments such as Flexible Access Systems and Mobile Radio have introduced new intelligent elements into telecommunications networks. Many of the functions currently performed by switching software will inevitably come under the control of these new intelligent elements, leading to the concept of the 'Distributed Exchange'.

To a certain extent devolvement is a 'natural' process, applicable to all complex systems. Devolvement occurs according to function and need to access specific information. It can be viewed as a short-term solution to some of the technical problems experienced in such systems.

However, devolvement entails distribution of data and distribution of processing, leading to a different class of problem. Indeed, devolvement, unless handled correctly, can actually give rise to more problems than it sets out to solve. One such problem is how to consistently upgrade distributed executable software.

The problems that will be encountered in upgrading call control software in devolved networks of the future are now examined. It is argued that distributed call processing systems pose unique logistical difficulties, particularly when interface definitions are modified. It is demonstrated that special software upgrading mechanisms will need to be defined, employing a global network timestamping scheme. A possible upgrading mechanism and timestamping scheme are discussed in detail.

Of great concern to network administrators will be the necessity for suppliers of the various network elements to work together in the development of upgrading mechanisms. In particular, a global timestamping scheme will need to be defined as part of inter-element interfaces and be consistent throughout the administrator's network. Suppliers should be preparing now for the time when their products need to be integrated into such an environment.

Before examining distributed call processing systems some concepts that will be used later are introduced.

In any system which allows different users to access shared data concurrently, there must be a method of 'concurrency control'. Concurrency control permits users to access shared data concurrently, while preserving the illusion that each user has (temporary) unique and independent access to the data. This property is called 'isolation'. The system ensures that each user is isolated from adverse effects which might otherwise arise from the actions of other users. 'Users', in this context, need not be people. A user could be an intelligent machine, or merely a process (or 'agent') acting on behalf of a person or machine.

Users interact with shared data by executing 'transactions'. A transaction is typically a series of read and/or write operations on the shared data, interspersed with other processing actions. The most important requirement of all transactions is that they preserve consistency. In other words, a single transaction executing on shared data that is initially in a consistent state will leave that shared data in a consistent (although not necessarily identical) state at the end of its execution.

Note that the definition requires the state of shared data to be consistent at the END of a transaction. During its execution, a transaction may well cause an inconsistent state in the shared data: for example, if data values are being transferred from one logical storage area to another. Thus all systems must provide a mechanism which ensures that each transaction execution is either completely successful or completely unsuccessful. This property is called 'transaction atomicity'.

For the purpose of discussing concurrency control, we shall assume that all transactions satisfy the consistency requirement, and that the shared data system guarantees transaction atomicity. A concurrency control method ensures that different users simultaneously executing different transactions do not 'interfere' with one another's actions in ways that might compromise either shared data consistency or user isolation.

An early and influential paper on this subject was K.P. Eswaran, J.N. Gray, R.A. Lorie and I.L. Traiger "The Notions of Consistency and Predicate Locks in a Database System" Communications of the ACM, Volume 19, Number 11, November 1976. This introduced the concepts of "serializability' and 'two-phase locking'.

Serializability is the notion that if several transactions are executed concurrently, the result ought to be the same as if they were executed serially in some order. Serializability guarantees shared data consistency.

Two-phase locking (2PL) is a scheme which in turn guarantees serializability. Under this scheme, every transaction takes out a logical lock on the data it wishes to access (whether it be a 'read' or a 'write' access) using a system-provided shared data locking mechanism. The rules of 2PL are :
- no transaction may read an item of data until it has acquired a (shared) read lock on that data item;
- no transaction may write to a data item until it has obtained an exclusive write lock on that data item;
- a transaction may relinguish a lock once it is no longer needed, but after relinquishing one lock NO FURTHER LOCKS MAY BE ACQUIRED.

The implication of this last rule is that each transaction executes its locking actions in two phases - an acquiring phase and a relinquishing phase.

It was shown in the above paper that the 2PL scheme guarantees serializability and hence preserves the consistency of the shared data. However, to guarantee full user isolation, it is also necessary for transactions to HOLD ALL THEIR EXCLUSIVE LOCKS until after they have completed. This is to prevent the possibility of other users seeing the effects of data updates which might afterwards be nullified by the system's method for ensuring transaction atomicity.

This extended 2PL scheme is a valid concurrency control method, but it suffers from the problems associated with locking. In a distributed system the most difficult problem to resolve is that of detecting 'deadlock' situations.

Deadlock arises when a number of users are blocked, each waiting to acquire a lock on a resource, in such a way that the 'waiting-for' chain forms a closed loop. For example:
A waiting for a resource already locked by B;
B waiting for a resource already locked by C;
C waiting for a resource already locked by A.

Deadlock detection techniques have been successfully implemented in centralised systems, but detecting such 'closed loops' is not so straightforward in distributed systems.

For this reason, and because of the inherent overheads involved in locking mechanisms, other concurrency control methods have been proposed.

These methods employ the notion of 'timestamping' each transaction at the time it is started. A method is devised whereby each transaction is given a unique identifier (not necessarily related to physical time), part of which indicates its 'age' relative to other transactions. Conflicts that may arise over resource usage are resolved by applying rules based on the relative ages of the competing transactions. Timestamp ordering (T/O) methods are typical examples of this form of concurrency control.

The major attraction of T/O methods is that deadlock cannot occur, and generally a higher degree of concurrency is possible. This results (in theory) in higher transaction throughputs. However, T/O methods do rely on a large amount of additional (control) information being stored in the system. For example, for each data item a record must be kept of the timestamp of the transaction that last updated it.

Another problem with T/O methods is that when a conflict arises, one of the conflicting transactions has to be 'rolled back'; that is, the transaction is aborted and all of its previous actions are nullified. The overheads involved in this are high. Hence T/0 methods should only be considered for systems in which the probability of conflict is small, and where the effects of roll back are not serious.

By combining 2PL and T/O methods, a basic set of 47 valid concurrency control algorithms could be devised. More recently, it has been shown that 2PL and T/O are simply special cases of a more general concurrency control algorithm, which includes the notion of a 'level of strictness'. This strictness level dictates the number of transactions which may have the same timestamp simultaneously during execution. In 2PL every transaction effectively has the same timestamp. In T/O every transaction has a different timestamp. It may be demonstrated that there is a discrete range of possible concurrency methods between these two extremes, but that each one is no more than a particular implementation of the one general algorithm.

Although it is impossible to predict the detailed architectures of all future processing systems, certain abstract characteristics can be identified:
1. The systems will run on heterogeneous equipment, almost certainly provided by different suppliers.
2. The equipment will be installed at network nodes, interconnected by signalling and/or data transfer links.
3. Some or all of the nodes will have 'call processing' ability i.e. there will be software mounted on the equipment for the purpose of providing a service to a network user. Network nodes with call processing ability we shall refer to as 'sites'. Sequences of call processing instructions we shall refer to as 'scripts'.
4. A 'call' will be initiated by a network user for the purpose of carrying out a desired service or a collection of desired services. 'Network users' need not be people. A user could be an intelligent machine (obeying pre-programmed instructions), or merely a process (or 'agent') acting on behalf of a person or machine.
5. Each 'call' will consist of a collection of script executions. At initiation, a call will execute a primary script. This may result in the execution of secondary scripts, which in turn may invoke tertiary scripts, and so on. Throughout the call's duration, script execution will be controlled by the logic encapsulated within script implementations. In order to take decisions, script executions will read data values, either stored and maintained within the system or provided by a network user. As a result of certain decisions, or in response to explicit instructions within a script, stored data within the system may need to be modified.
6. To enable calls to invoke script executions or access data values stored at remote sites (i.e. at sites different from the site where script execution is currently taking place), it will be necessary to define inter-site interfaces. Such inter-site communication will be necessary because not all network resources will be located at all sites.

The preceding analysis is at an abstract level, since it is impossible to predict exactly what types of 'call' will be available in the future. Although it is wished to remain at this abstract level, it should be emphasised at this point that 'calls', as defined in paragraph 5 above, may bear little resemblance to calls as understood today.

For example, a 'call' might consist of a series of executions of a particular service every day at a particular time. To initiate such a call, a user would need to invoke only one primary script execution, which thereafter controls the subsequent regular executions of the desired service. Such a primary script might be resident on the user's own equipment (i.e. customer's premises equipment, or the ability to call up services on a regular basis may be offered (as a service in itself) by either the network administrator or a third party supplier.

As another example, consider a 'call' (initiated by the network administrator's own network management system) which accumulates statistics from many nodes in the network, then evaluates and analyses these statistics at some central point. It is likely that during the statistics-gathering phase such a call would execute scripts in parallel at different sites in the network. (For this reason, the above definition of a 'call' refers to a 'collection' of script executions, rather than to a 'sequence' of such executions).

These examples should serve to illustrate that no assumptions can be made about the requirements of call processing based purely on current knowledge and experience. It is only by taking an abstract view that there is a fair chance of catering for all conceivable future network services.

Returning now to the abstract description of a distributed call processing system:-

Paragraph 5 refers to stored data that is read, and sometimes written to, by calls executing scripts. This data is 'call data', in the broad sense corresponding to our definition of a call. The control of this data and of accesses to it will pose a difficult problem in its own right. The concurrency issues discussed earlier will have to be addressed, in addition to integrity, availability and security of the data.

In addition to the call data, there will also be stored within the system the scripts that control the call processing itself.

Scripts are mostly read (and executed), and rarely written to (updated/modified/enhanced). A collection of scripts is simply a pool of shared data, capable of being accessed by a number of concurrent transactions.

There are two types of transaction which access script data:
a. A 'software upgrade' transaction typically performs a collection of write operations upon a number of script data items. It may well introduce (insert) new data items into the pool of shared script data, or delete existing items that are no longer required. The software upgrading system will attempt to ensure that all such changes to the pool of script data are consistent, an activity usually referred to as 'configuration control'. The software upgrading system must therefore ensure that an upgrade transaction is either completely successful or completely unsuccessful, otherwise the pool of script data will be left in an inconsistent state.
b. The other type of transaction which accesses script data performs a collection of read (and execute) operations, which together achieve some desired effect. This is what has been defined to be a 'call'. Generally, a partially completed call is to be avoided, perhaps even nullified. (For example, any charging information already recorded may need to be deleted).

Both types of transaction are true 'transactions' upon the shared pool of script data, as defined earlier. Thus it should be expected that the concurrency control issues discussed are just as important for script data as for (operational level) call data.

In fact, most systems are not concerned with these issues, the reason being that transactions whose operations conflict with one another are never executed concurrently. Under normal operation, all transactions on script data are of the read-only b. type, and so cannot interfere with each other: hence, isolation is achieved automatically. At times when software needs to be upgraded, the operational system is 'switched off' while the upgrade takes place. The upgrading system ensures that if two or more upgrade transactions are permitted to execute concurrently, then their operations do not conflict.

It has to be assumed that distributed call processing systems of the future will not be able to be 'switched off'. Even if administrators were willing to consider this option, it is doubtful whether a suitably 'quiet' time of the day or week could be found, during which services could be made unavailable while software upgrades were being performed. Facilities such as Flexible Access Systems enable customers to make use of their network access equipment at 'off-peak' times. The wide range of services that will become available in the Integrated Services Digital Network will further encourage high and continuous utilisation of network users' equipment. Network administrators will find that there are no 'off-peak' periods. Any temporary suspension of service would be bound to cause widespread customer dissatisfaction.

Besides these commercial considerations, it may not technically be possible to switch off the entire system (or even part of it) without a risk of causing inconsistencies in the call or in the users' results data. Difficulties will arise from calls that are already in progress at the time an upgrade is required to be performed. Cancelling these calls would not be commercially acceptable. If instead calls-in-progress were temporarily suspended while the upgrade took place, it could happen that the former part and latter part of a call came to be controlled by different, incompatible software versions, thereby resulting in inconsistencies.

Thus, a software upgrading mechanism is required which:
a. allows calls to proceed while upgrades are taking place;
b. ensures that inconsistencies do not arise from calls executing incompatible scripts.

This is already achieved within switch software, but the problems involved in a distributed call processing system are more far-reaching.

According to the present invention there is provided a method of upgrading software for a distributed call processing system in a telecommunications network, wherein a script corresponding to a software version has an associated active time, the script being sent to each site within the network, together with the active time, and being made available for execution at each site by the active time, a call when initiated being given a timestamp which includes the start time of the call and at each site participating in the call transaction the version of the script executed is the version having the greatest active time less than or equal to the call start time.

The present invention will now be described, by way of example.

Typically, a software upgrade will consist of a number of modifications to existing scripts and/or inserts of new scripts. These scripts may be stored at different sites, and in some cases may be replicated at a number of sites in the network. The modifications and inserts will have been tested beforehand to ensure that the resulting set of call processing scripts is consistent. It will be important to ensure:
a. that either ALL modifications /inserts are successful or NONE are successful;
b. if ALL upgrades are successful, that they come into effect AT THE SAME TIME at all affected (participating) sites.

Condition a. simply defines a software upgrade as a transaction on shared script data, as has already been observed.

Condition b. is a new condition. To understand precisely what this means, there is a need to examine the nature of time and the ordering of events in a distributed system. For the present it is assumed that it is known what is meant by 'at the same time' in the context of a distributed system.

The mechanics for ensuring that condition a. is observed are well understood. It is assumed that the distributed call processing system of the future has a mechanism for enforcing condition a.

It has been determined that a software upgrading mechanism in a distributed call processing environment must permit calls-in-progress to continue unhindered. Additionally, newly started calls must be prevented from accessing scripts while these are being modified or inserted.

The question arises: how can a particular site determine whether a request to execute a script is part of a call-in-progress or part of a newly started call? The difference is crucial, because the site must be able to determine which version of the call processing software is controlling the call.

According to the present invention there is provided a mechanism that will enable a site to make this distinction. For the present it is assumed that a site has this ability.

The implication here is that if calls-in-progress are to be allowed to continue unhindered, then they must NOT be allowed to access the newly updated or inserted scripts. Otherwise the condition could arise where the former part of a call executes one version of the software, while the latter part executes another (possibly incompatible) version. A mechanism must be devised for preserving the original version of the software, at least until all calls-in-progress have completed. It follows that the system does not have to concern itself with the concurrency of calls-in-progress and software upgrades, since these two types of transaction will be accessing different scripts.

However, the system will have to address the possibility that parts of newly started calls may attempt to access upgraded scripts which have not yet been fully modified or inserted. (This condition could arise owing to the difficulty of synchronising an upgrade across the network, or because a primary script is being upgraded). Thus a concurrency control method will be required for this aspect of a software upgrade.

The method employed to deal with this situation could be site dependent. Once a call has been identified as a newly started call, the way in which a site prevents possible conflicts with upgrades in progress could be a matter of local system design. It would be one way for suppliers of network nodes to differentiate their products.

Either a 2PL or a T/O scheme could be used as above. It might also be possible to design a customised concurrency control method, to take advantage of the special conditions pertaining to the transactions involved. A T/O scheme might prove attractive because:
a. There are relatively few items (scripts) for which timestamp data would have to be stored.
b. Very few conflicts would actually occur.
c. The calls that would need to be 'rolled back' in the event of a conflict would be in their call set-up stage (newly started). Thus, rolling back may be acceptable in this case.
d. As will be shown later a network-wide timestamping scheme will be required to deal with calls-in-progress. Thus no additional overhead would be incurred in generating timestamps to deal with newly started calls.

In L. Lamport, "Time, Clocks and the Ordering of Events in a Distributed System", Communications of the ACM, Volume 21, Number 7, July 1978 a 'distributed system' is defined as a system in which "the message transmission delay is not negligible compared to the time between events....".

In the projected distributed call processing system, a transaction associated with a call will typically execute a number of scripts. A transaction associated with a software upgrade will typically modify or insert a number of scripts. These scripts will typically be located at different network sites. We shall refer to the upgrade or execution of a script as an 'event'. A 'message' is a request sent to a site to upgrade or execute a script, or a response indicating successful or unsuccessful completion of such a request. The sending and receipt of such messages are also classed as 'events'.

Note that in the complete system there will be other events and other types of message passed between sites. However, these will be associated with the operational level of the system. Here, as previously, the concern is with the control of the upgrade (writing) and execution (reading) of call processing scripts.

The paper just referred to defines a partial ordering '->' of events in a distributed system, which is adapted to this system as follows:
1. If A and B are two events (upgrade/execution of a script, sending/receipt of a message) at the SAME SITE, and A occurs before B, then A -> B.
2. If event A is the action of sending a message and event B is the action receiving the same message, then A -> B.
3. If A -> B and B -> C, then A -> C.

Part 2 of this definition models the environment within which each site operates in a distributed system. Site X knows nothing about an event that has occurred at site Y until it receives a message. Thus an event at remote site Y cannot possibly have an effect on events at site X until a message is sent from Y and received by X.

It follows that if event A occurs at site X at the same instant (in physical time) as event B occurs at site Y, then it is not meaningful to say either that A -> B or B -> A. Two events A and B are said to be 'pseudo-simultaneous' if neither A -> B nor B -> A. It is not necessary for A and B to occur exactly simultaneously in physical time. It is merely sufficient that A and B take place within a period during which no message is sent and received between their host sites. Because the relationship '->' is not defined for all pairs of possible events in the system, it is only a 'partial ordering' of events.

TOTAL ordering of events could be imposed upon a distributed system in such a way that it preserves the partial ordering defined by '->'. In other words, events occurring in the system could be assigned unique identifiers (id-A, id-B etc.) such that:
a. For all pairs of events A and B, either (id-A < id-B), or (id-B < id-A) [where '<' is some ordering operator].
b. If A -> B, then id-A < id-B.

In the above paper by Lamport the identifiers assigned to events were labelled 'timestamps'. This is perhaps a misleading name, since the incrementing of identifiers does not need to be related to time. In fact, one method suggested increments identifiers based upon the occurrence of events. Under this scheme, if no events take place for a period of (physical) time, then the timestamp counter is not incremented.

The paper went on to show that physical clocks at each site of a network could be used to generate a valid timestamping scheme corresponding to the passage of physical time. This would probably be the preferred method in distributed call processing systems of the future, since the timestamp values then have more significance to users. Also, timestamping schemes not based upon physical time can produce system behaviour which disagrees with the ordering perceived by the system's users, thereby producing apparently anomalous results.

For all total ordering schemes in distributed systems, timestamps are made globally unique by appending to the generated timestamp value the identifier of the site at which the timestamp was generated. Some ordering algorithm is then employed to assign a total ordering to timestamps that have been (simultaneously' generated at different sites.

Within each single site, a similar approach can be adopted to distinguish between events that occur 'simultaneously'. For example, in a multi-processor single site environment, an identifier could be assigned to each processor, to be appended to the generated timestamp value. Within EACH SITE, a total ordering of events can then be determined.

As it has been since shown, for the purpose of concurrency control it is possible to relax the total ordering condition, allowing a number of events to have the same timestamp value (the 'level of strictness'). This might be easier to implement in a distributed call processing system; but it would be advisable to keep the timestamp generating method linked to physical time, for the reasons outlined above.

Earlier, it was recognised that each site has to be capable of distinguishing calls-in-progress from newly started calls while software upgrades are in progress. However, this is only an instance of a wider ranging requirement. In fact, each site has to be able to determine which version of the network call processing software is controlling each call. This is so that correct versions of local scripts can be executed on behalf of calls which submit execution requests.

It is evident that every call must have associated with it some identifier which provides each site with the necessary software version information. In the next section it is shown how a network-wide timestamp can be used to provide this information. It is also argued that such a timestamp is the only practical identifier in the environment of distributed call processing systems of the future.

A software upgrading method in accordance with the present invention will now be described for a distributed call processing system based on network-wide timestamping.

The following assumptions are made:
A.1 The communication links between sites in the network are reliable: that is, for any two sites X and Y in the network, all messages sent from site X to site Y will eventually be delivered to Y, and will arrive at Y in the same order as they dispatched from X. This is a 'standard' assumption to make when reasoning about distributed systems.
A.2 Every site in the network has a physical clock. The clocks are synchronised across the network, either by the method suggested in Lamport or by some other method.
A.3 The network operates a global timestamping scheme, based upon readings from each site's physical clock. The scheme could be a total ordering scheme for events as defined above, or a partial ordering with a defined 'level of strictness'. Whatever the method, the timestamps must include a physical time element to a defined level of accuracy (e.g. to the nearest second, to the nearest 100 milliseconds).

The proposed upgrading mechanism obeys the following rules:
U.1 Every script has an associated 'active time'. This is the physical time (as read from the host site's physical clock) at which the script becomes available for reading (and execution) by call processing transactions. When ready for execution, a script is assigned a timestamp by the host site that includes the script's 'active time' as one element (see assumption A3).
U.2 No script can be modified after it has become active. If the logic of a script needs to be changed, this is achieved by inserting a new script. The new script is a modified version of the original script, but will have an 'active time' greater (i.e. later) than the original version.
U.3 When a software upgrade needs to be performed, all the participating sites are sent copies of the new scripts, together with a time at which these upgrade scripts are to become active. It is then the responsibility of each site to ensure that the new scripts are ready and available for execution at or before the requested 'active time', and that each one is assigned a suitable timestamp.

The handling of call processing transactions at each site obeys the following rules:
H1. When a call is initiated (i.e. when the call processing transaction starts execution of a primary script), the time is read from the host site's physical clock. This is the call's 'start time'. The host site then assigns a timestamp to the call transaction that includes the call's 'start time' as one element (see assumption A3).
H2. Whenever a message (as defined earlier) is sent from one site to another to request the execution of a script, the call transaction timestamp is attached to the message. Thus every site participating in a call transaction has knowledge of the call's 'start time'.
H3. Whenever a call transaction requests execution of a script, the version of the script which is made available to the transaction is the version which has the greatest 'active time' less than or equal to the call's 'start time'.

Rules U1-U3 and H1-H3 will ensure that:
a. Calls-in-progress execute consistent versions of scripts. It is not possible for a call which started prior to an upgrade to execute upgraded scripts.
b. All scripts required by calls-in-progress remain available until the calls have completed.
c. Software upgrades are made available at 'the same time' at all participating sites (within the meaning of 'pseudo-simultaneity' as defined earlier).

In this scheme different versions of the same call processing software are stored simultaneously in the system. The system maintains the current version of the call processing software, plus all previous versions that have ever been executed or could ever have been executed) by call processing function.

Thus, rule U2 will need to be modified in a practical system to allow for deletion of script versions that are no longer required. One way to achieve this would be for the administrator of the network to define a maximum duration for calls (e.g. one week, one month). Each site could then operate a 'garbage collection' process to delete scripts with out-of-date 'active times'. (Of course, only scripts which had been superseded by later versions or which were otherwise no longer required could be deleted in this way).

A potential problem could occur if a request to execute a script arrives at site X with a 'start time' of T when an upgrade that was to have an 'active time' of T still had not been performed at X. This could happen if the synchronisation of time across the network was in error.

There are two possible approaches to this problem:
1. If site X guarantees the availability of every upgrade script at or before its 'active time' (as required in rule U3), it follows that when the request arrives at site X with 'start time' T, the physical time at X must be less than or equal to T. If the time at X is T, then presumably the upgrade is still in progress.
   Site X can deal with this situation by:
   a. Delaying the execution of requests which have a 'start time' greater than the site's physical time. Such a request is delayed until such time as the site's physical time is greater than or equal to the request's start time'.
   b. Ensuring that in any time interval, outstanding upgrades are completed before any execute requests are handled. (Perhaps by employing concurrency control methods as discussed above).
2. Alternatively, rule U3 can be modified to require that each site be responsible for ensuring that upgraded scripts are available at or before some time interval EARLIER than the requested 'active time'. The time interval need only be large enough to ensure that the situation described above could never happen. In other words, the specified time interval must be larger than the greatest theoretical synchronisation error across the network.
   This method of 'upgrading in advance' has certain attractions. For example, the control of a distributed upgrade transaction can be made simpler if all participating sites have a chance to confirm that the upgrades are in place and available PRIOR to the requested 'active time'. Further, if the method can be guaranteed to work, then there is no need to employ concurrency control methods as above, because simultaneous attempts to read (execute) and write (insert) scripts will never occur.

It is argued that in the distributed call processing systems of the future, as much flexibility and generality as possible must be built in from the start. Many different suppliers will be involved in efforts to co-ordinate their software upgrades. It is vital that a scheme be put in place that does not rely on knowledge and interpretation of other suppliers' issue control mechanisms. Basing timestamps on physical time provides a common and easily understood approach.

Another objection may be that inter-supplier configuration problems are unlikely to arise in future systems. Each network element may be viewed as a 'black box', with precisely defined interfaces to the rest of the network. To these arguments the counter argument is that inter-element interfaces, no matter how well defined, are always open to interpretation. Co-ordinated software changes will be required, as they have been required in all previous multi-module software systems. Further, it is extremely unlikely that interface definitions will remain static. Administrators will require additional facilities that were not considered when interface definitions were previously defined. The modification of an interface is an obvious candidate for producing the kind of configuration control problems that has ben addressed.

Finally, it is pointed out that the labelling method suggested here for calls has distinct advantages, being a timestamp based on physical network time. Not only will it avoid the anomalous results alluded to earlier, but the use of time to label software versions has more meaning for a (human) network user. Executing the same version of a service "...as we used last Tuesday evening" must be a more meangingful statement for a customer than : "We need to use issue 3, version 1.2 of this service".

The implications of the foregoing are important for network administrators and suppliers of call processing equipment.

Administrators must decide what sort of software upgrade control they wish to see in their future networks. Some sort of software version identifier needs to be included as part of inter-element interfaces. Each site in the network must also understand how to make use of this identifier in handling call processing requests. These aspects need to be addressed in administrators' requirements specifications.

Timestamp generators, execution request handlers and software upgrading mechanisms must operate consistently throughout the network.

Products must be designed so that they can readily be adapted to function in the distributed systems of the future. Listed below are three ways in which the design of present-day call processing system elements can be modified to make them more easily incorporated into future systems:
R1. In all inter-process messages causing execution of call processing software, space should be set aside for a timestamp equivalent identifier.
R2. Execution request handlers should be made to take account of the value of the identifier in each message. (For the time being, this could simply amount to ensuring that handlers have access to message identifiers).
R3. Upgrading mechanisms should be modified to allow for more than one version of the same call processing software to be resident simultaneously in the system. (This, of course, has implications for software storage requirements).

If distributed call processing systems are to be a viable proposition, mechanisms must be built in from the start to enable these systems of the future to function correctly.

## Claims

1. A method of upgrading software for a distributed call processing system in a telecommunications network, wherein a script corresponding to a software version has an associated active time, the script being sent to each site within the network, together with the active time, and being made available for execution at each site by the active time, a call when initiated being given a timestamp which includes the start time of the call and at each site participating in the call transaction the version of the script executed is the version having the greatest active time less than or equal to the call start time.

2. A method as claimed in Claim 1, wherein the script is made available at each site before the active time.

3. A method as claimed in Claim 1, wherein execution of requests in respect of calls having a start time greater than the physical time at a site is delayed until the physical time at the site is greater than or equal to the start time.

4. A method as claimed in Claim 1, 2, or 3, wherein the start time includes a site identifier.

5. A method as claimed in any preceding claim, wherein the timestamp is derived from a physical clock.

## Patentansprüche

1. Verfahren zur Erweiterung von Software für ein verteiltes Anrufverarbeitungssystem in einem Telekommunikationsnetz, bei welchem ein Skript, das einer Softwareversion entspricht, eine zugehörige Aktivierungszeit aufweist, das Skript zusammen mit der Aktivierungszeit zu jedem Standort in dem Netz gesendet wird und bis zur Aktivierungszeit zur Ausführung an jedem Standort zur Verfügung gestellt wird, ein Anruf, wenn er eingeleitet wird, einen Zeitstempel erhält, welcher die Startzeit des Anrufs beinhaltet, und an jedem Standort, der bei der Anruftransaktion mitwirkt, die Version des ausgeführten Skripts diejenige Version mit der größten Aktivierungszeit kleiner oder gleich der Startzeit des Anrufs ist.

2. Verfahren nach Anspruch 1, bei welchem das Skript an jedem Standort vor der Aktivierungszeit zur Verfügung gestellt wird.

3. Verfahren nach Anspruch 1, bei welchem das Ausführen von Anforderungen hinsichtlich von Anrufen mit einer größeren Startzeit als der realen Zeit an einem Standort verzögert wird, bis die reale Zeit an dem Standort größer oder gleich der Startzeit ist.

4. Verfahren nach Anspruch 1, 2 oder 3, bei welchem die Startzeit eine Standortkennung beinhaltet.

5. Verfahren nach einem der vorhergehenden Ansprüche, bei welchem der Zeitstempel von einem realen Takt abgeleitet wird.

## Revendications

1. Procédé d'évolution de logiciel destiné à un système de traitement d'appel réparti au sein d'un réseau de télécommunications, dans lequel un script correspondant à une version de logiciel a une heure d'activité associée, le script étant envoyé à chaque site se trouvant dans le réseau, ensemble avec l'heure d'activité, et étant rendu disponible pour s'exécuter au niveau de chaque site par l'heure d'activité, un appel, lorsqu'amorcé, ayant une estampille temporelle qui inclut l'heure de début de l'appel et au niveau de chaque site participant dans la transaction d'appel, la version du script exécuté est la version ayant la plus grande heure d'activité qui est inférieure ou égale à l'heure de début d'appel.

2. Procédé selon la revendication 1, dans lequel le script est rendu disponible au niveau de chaque site avant l'heure d'activité.

3. Procédé selon la revendication 1, dans lequel l'exécution de demandes concernant des appels ayant une heure de début supérieure à l'heure physique au niveau d'un site est retardée jusqu'à ce que l'heure physique au niveau du site soit supérieure ou égale à l'heure de début.

4. Procédé selon la revendication 1, 2 ou 3, dans lequel l'heure de début inclut un identificateur de site.

5. Procédé selon l'une quelconque des revendications précédentes, dans lequel l'estampille temporelle est dérivée à partir d'une horloge physique.
